(19) Europäisches Patentamt
European Patent Office
Office européen des brevets

(11) **EP 4 574 248 A1**

(12) **EUROPEAN PATENT APPLICATION**

(43) Date of publication:
**25.06.2025 Bulletin 2025/26**

(21) Application number: **23217613.1**

(22) Date of filing: **18.12.2023**

(51) International Patent Classification (IPC):
**B01D 67/00** (2006.01)    **B01D 69/02** (2006.01)
**B01D 71/02** (2006.01)

(52) Cooperative Patent Classification (CPC):
**B01D 69/02; B01D 67/0041; B01D 71/0215;**
B01D 61/147; B01D 2323/08; B01D 2325/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LiqTech Holding A/S**
**9500 Hobro (DK)**

(72) Inventor: **Eray, Esra**
**9500 Hobro (DK)**

(74) Representative: **Høiberg P/S**
**Adelgade 12**
**1304 Copenhagen K (DK)**

(54) **FILTRATION MEMBRANES PREPARED FROM NANOPOWDERS**

(57)    The present disclosure relates to the field of ceramic filtration membranes and methods for their preparation and use. In particular, the present disclosure relates to ceramic membranes prepared from SiC precursors comprising a mixture of two SiC powders each one with β-SiC crystalline phase and another with α-SiC crystalline phase and different particle sizes, respectively.

EP 4 574 248 A1

## Description

### Technical field

The present disclosure relates to the field of ceramic filtration membranes and methods for their preparation and use. In particular the present disclosure relates to ceramic membranes prepared from SiC precursors comprising a mixture of two SiC powders, one with $\beta$-SiC crystalline phase and another with $\alpha$-SiC crystalline phase and different particle sizes, respectively.

### Background

Porous ceramic membranes are an attractive material for water and wastewater treatment applications. Among many materials available to manufacture water filtration membranes, silicon carbide (SiC) are well known due to the chemical, thermal and mechanical robustness of SiC.

Despite this, preparation of SiC ceramic membranes with suitable particle and pore sizes, as well as narrow pore size distribution is highly challenging. Particularly because the production of SiC membranes requires sintering at elevated temperatures, of up to 2100 °C, which leads to formation of larger pore sizes and a larger pore size distribution. In addition, the high temperatures required substantially increase the production cost, thus putting SiC at a disadvantage compared to other materials due to higher production costs.

This limits the applicability of pure SiC membranes for water and wastewater treatment, especially for applications that require ultrafiltration. The larger pores and larger pore size distribution leads to a decrease in efficiency of filtration as well as more frequent fouling of the membrane.

Therefore, there is an unmet need in the field for providing SiC ceramic membranes with small pores and narrow pore size distribution that display good water permeability and filtration properties which are retained under stress conditions such as chemical, thermal or mechanical stress.

### Summary

The present disclosure provides a solution to the above-mentioned challenges by demonstrating the preparation of SiC ceramic membranes prepared from a colloidal precursor comprising a mixture of two SiC powders, one with $\beta$-SiC crystalline phase and another with $\alpha$-SiC crystalline phase and different particle sizes, respectively.

In one main aspect, the present disclosure provides for a ceramic filter for filtration of liquid, the filter comprising at least one membrane, said membrane comprising:

a. a mixture of $\beta$-SiC and $\alpha$-SiC phases; and
b. pores with an average maximum pore size of at most 120 nm and a pore size distribution having a d50 from about 40 nm to about 90 nm, and a d90 from about 60 nm to 100 nm.

In another main aspect, the present disclosure provides for a ceramic filter, the filter comprising at least one membrane obtained from sintering a mixture of ceramic particles comprising or consisting of:

a. $\beta$-SiC particles having a median particle size (d50) below 60 nm, such as from 10 nm to about 50 nm, and
b. $\alpha$-SiC particles having median particle size (d50) below 1 $\mu$m.

The inventors have shown that sintering mixtures prepared from a colloidal precursor comprising a mixture two SiC powders with different SiC crystalline phases and different particle size distribution under appropriate conditions leads to SiC membranes with small pores size and narrow pore size distribution while maintain excellent chemical, mechanical and thermal resistance. The examples demonstrate defect-free membranes with pore size of at most 120 nm and narrow pore size distribution providing good water permeability while having excellent chemical and thermal resistance.

Thus, in one aspect, the present disclosure provides a method of producing a membrane for a ceramic filter, the method comprising:

a. providing a suspension of a ceramic precursor comprising:

i. $\beta$-SiC particles having a median particle size (d50) below 60 nm, such as from 10 nm to about 50 nm, and

ii. $\alpha$-SiC particles having a median particle size (d50) below 1 $\mu$m;

b. shaping the suspension as a membrane;

c. drying the homogeneous dispersion in b) to obtain a dry ceramic precursor;

d. sintering the dry ceramic precursor in c) at a temperature from about 1400 °C to about 1600 °C in an inert atmosphere.

The advantages of the membranes and methods described therein are many and include for example and stem from the combination of a small pore size in combination with a narrow pore size distribution. Advantages of the present invention include but are limited to:

- Suitable average pore size for ultrafiltration and microfiltration applications, while providing good water permeance.
- Narrow pore size distribution increases filtration efficiency and reduces tendency of fouling of the membrane.
- Pore size and pore size distribution stable to chemical and thermal stress over extended period.
- Tunable pore size and pore size distribution according to process parameters.
- Decreased temperature of production reduces energy demand of the process.

In yet another aspect, the present disclosure provides for a filter system comprising the ceramic filter as described herein, a feeding pipe for feeding liquid into the ceramic filter and/or a permeate pipe for withdrawing filtered liquid and at least one liquid pump connected to said feeding pipe and/or to said permeate pipe.

In another aspect, the present disclosure provides for a method of filtering a liquid through a ceramic filter as described herein, or the filter system as describe herein, thereby obtaining a filtrate.

## Description of Drawings

Figure 1: Schematic representation of the preparation of ceramic filters.

Figure 2: SEM images of SiC membrane surfaces with $\beta$-SiC/$\alpha$-SiC of 0.25: (a) low solid content (5 wt % to 7 wt %), (b) medium solid content (7 wt % to 10 wt %), (c) high solid content (10 wt % to 12 wt %). SEM images of SiC membrane surface with medium solid content (7 wt % to 10 wt %): (d) $\beta$-SiC/$\alpha$-SiC ratio of 0.67, (e) $\beta$-SiC/$\alpha$-SiC ratio of 1, and (f) $\beta$-SiC/$\alpha$-SiC ratio of 1.5. (g) particle size distribution of coating suspension $\beta$-SiC/$\alpha$-SiC ratio of 0.25 showing no agglomeration.

Figure 3: SEM images of the surface and cross-section of SiC membranes as a function of sintering temperature: (a, b, c) membrane M7 at 1600 °C, (d, e, f) membrane M8 at 1550 °C, (g, h, i) membrane M9 at 1525 °C, (j, k, l) membrane M10 at 1500 °C, and (m, n, o) membrane M11 at 1450 °C.

Figure 4: High-resolution SEM images of surface microstructure of the SiC membranes as a function of sintering temperature: (a, b) intermediate layer, (c, d) membrane M7 at 1600 °C ; (e, f) membrane M8 at 1550 °C; (g, h) membrane M9 at 1525 °C; (i, j) membrane M10 at 1500 °C; (k, l) membrane M11 at 1450 °C.

Figure 5: X-Ray diffraction patterns of the prepared SiC membrane layers as a function of sintering temperatures.

Figure 6: The pore size distribution of the developed SiC membranes at various sintering temperatures.

Figure 7: Pure water flux of the SiC membranes as a function of pressure at various sintering temperatures.

Figure 8: (a) The change of the maximum pore size of membrane M10 exposed to acid and alkali corrosion; (b) pure water flux as a function of applied pressure for membrane M10 before and after acid and alkali corrosion tests; (c) the change of the maximum pore size of membrane M11 exposed to acid and alkali corrosion; and (d) pure water flux as a function of applied pressure for membrane M11 before and after acid and alkali corrosion tests.

Figure 9: (a) The maximum pore size of the final membranes as a function of thermal shock cycles and (b) pure water flux as a function of applied pressure for membranes M10 and M11 before and after thermal shock resistance test.

**Definitions**

Ceramic materials based on wet state processing are made from particulate powders and powder suspensions, which are subsequent sintering or fired, resulting in fusion of the particles, e.g. via solid state diffusion, into a bulk. Consequently, the particle sizes and pore sizes of ceramic materials are generally non-uniform. Thus, the porosity is typically evaluated based on the pore size distribution.

A pore is typically not spherically shaped, and unambiguously defined by its diameter or radius. In most cases, the pore is not spherical, and will instead form an irregular, interconnected network with neighbouring pores. Thus, when applying the common techniques as known to the skilled person for evaluating pore sizes, the pore size is often quantified in terms of a representative pore diameter or pore cylinder diameter, such as the average pore/cylinder diameter. For example, the size of non-spherical pore may be quantified as the diameter of an equivalent sphere or cylinder, such as the sphere/cylinder having the same volume or surface area as the non-spherical pore. Alternatively, the pore size may be measured indirectly by the gas pressure required to displace a liquid within a pore, as measured by capillary flow porosimetry and Young-Laplace formula. Despite this is not a proper quantification from a geometrical point of view, it is applied to provide a quantitative description of the characteristic sizes.

The term "pore size distribution" refers to the range of sizes that pores or openings within a material have. Pore size distribution is typically expressed in terms of the range of pore diameters present within the membrane material. It can be described using various metrics, such as the mean pore size, median pore size, and the distribution's width. A narrow pore size distribution indicates that the majority of pores are close in size, while a broader distribution indicates a wider range of pore sizes.

The term "particle size distribution" to the range of sizes that particles in a material or suspension have. Particle size distribution is typically expressed in terms of the range of particle diameters present within the membrane material. It can be described using various metrics, such as the mean particle size, median particle size, and the distribution's width. A narrow particle size distribution indicates that the majority of particles are close in size, while a broader distribution indicates a wider range of particle sizes.

A "membrane" as described herein refers to a sheet or layer of material that acts as a selective barrier that allows some things or substances to pass through but stops others. For example, a filtration membrane allows a fluid or liquid to pass through but stops suspended or insoluble particles to pass through.

Particle or pore size distribution can be characterized by the percentiles of diameters of pores or particles, respectively, in the population. For example by identifying the sizes that correspond to the 10th, 50th or 90th percentile within the population of pores and sizes. In general, the size corresponding to the X percentile within a population is defined as "dX". For example:

- d50 (50th percentile): Also known as median particle or pore size, is the size below which 50% of the pores or particles are smaller and 50% of the pores or particles are larger. It's the size that divides the population into two equal sizes.
- d10 (10th percentile): is the particle or pore size below which 10% of the particles or pores in the distribution are smaller. In other words, 10% of the particles or pores have sizes equal to or less than the d10 value
- d90 (10th percentile): is the particle or pore size below which 90% of the particles or pores in the distribution are smaller. In other words, 90% of the particles or pores have sizes equal to or less than the d90 value.

Particle size and particle size distribution can be determined in multiple ways as it will be known to someone of skill in the art. For example: Dynamic light scattering (DLS), laser diffraction, sieve analysis, electron microscopy or imaging techniques.

Pore size and pore size distribution can be determined in multiple ways as it will be known to someone of skill in the art. For example: capillary flow porosimetry, liquid intrusion porosimetry, gas adsorption, such as BET among others.

The term "about" as used herein to refer to an amount or percentage is to be interpreted as a variation of ± 10% with respect to the value of the amount or percentage it refers to, such as ± 5%.

**Detailed description**

*A ceramic filter*

In one main aspect, the present disclosure provides for a ceramic filter for filtration of liquid, the filter comprising at least one membrane, said membrane comprising:

a. a mixture of β-SiC and α-SiC phases; and
b. pores with an average maximum pore size of at most 120 nm and a pore size distribution having a d50 from about 40 nm to about 90 nm, and a d90 from about 60 nm to 100 nm.

In another main aspect, the present disclosure provides for a ceramic filter, the filter comprising at least one membrane obtained from sintering a mixture of ceramic particles comprising or consisting of:

a. β-SiC particles having a median particle size (d50) below 60 nm, such as from 10 nm to about 50 nm, and
b. α-SiC particles having an average particle size (d50) below 1 μm.

In one embodiment, the membrane has a median pore size (d50) from about 40 nm to about 90 nm, such as from about 40 nm to about 50 nm, such as from about 50 nm to about 60 nm, such as from about 60 nm to 70 nm, such as from about 70 nm to about 80 nm, such as from about 80 nm to about 90 nm. In one embodiment, the membrane has a median pore size (d50) from 65 nm to about 90 nm. In one embodiment, the membrane has a median pore size (d50) from about 70 nm to about 90 nm. In on embodiment, the membrane has a median pore size (d50) of about 70 nm, or about 75 nm, or about 80 nm, or about 85 nm, or about 90 nm.

In one embodiment, the membrane has a maximum pore size of 110 nm or less, such as 105 nm or less. In one embodiment, the membrane has a maximum pore size of 100 nm or less. In one embodiment, the membrane has a maximum pore size of 90 nm or less, such as 89 nm, 88 nm, 87 nm, 86 nm, or 85 nm or less. In one embodiment, the membrane has a maximum pore size of 85 nm or less.

In one embodiment, the membrane has a maximum pore size from about 80 nm to about 120 nm. In one embodiment the membrane has a maximum pore size from about 80 nm to about 110 nm. In one embodiment the membrane has a maximum pore size from about 80 nm to about 105 nm. In one embodiment, the membrane has a maximum pore size from about 80 nm to 85 nm, or 85 nm to about 90 nm, or from 90 nm to about 95 nm, or from about 95 nm to about 100 nm or from about 100 nm to about 105 nm.

In one embodiment, the membrane has a pore size distribution such that d90 is from about 70 nm to 100 nm, such as from 70 nm to 75 nm, such as from 75 nm to about 80 nm, such as from about 80 nm to about 85 nm, such as about 85 nm to about 90 nm, such as from about 90 nm to about 95 nm, such as from about 95 nm to about 100 nm. In one embodiment, the membrane has a pore size distribution such that d90 is about 70 to 75 nm.

In one embodiment, the membrane has a pore size distribution such that the pores have a d50 from about 65 nm to about 90 nm, and a d90 from about 70 to about 100 nm. In one embodiment, the membrane has a pore size distribution such that the pores have a d50 from about 65 nm to about 71 nm, and a d90 from about 71 nm to about 80 nm. In one embodiment, the membrane has a pore size distribution such that the pores have a d50 from about 80 nm to about 90 nm, and a d90 from about 90 nm to about 100 nm.

In one embodiment, the membrane has a pore size distribution such that the ratio between d90 and d50 (d90:d10) is of less than 1.2, such as less than 1.15, such as about 1.10 or about 1.05.

The pore size distribution of a membrane can be measured in many suitable ways as known to someone of skill in the art, e.g capillary flow porosimetry, liquid intrusion porosimetry, gas adsorption, such as BET among others. In one embodiment, the pore size distribution is measured by capillary flow porosimetry.

In one embodiment, the membrane has a thickness of 5 to 20 μm, such as from about 8 to 14 μm ± 1.4 μm.

In one embodiment, the membrane is obtained from sintering a mixture of ceramic particles comprising or consisting of:

a. β-SiC particles having a median particle size (d50) below 60 nm, such as from 10 nm to about 50 nm, and
b. α-SiC particles having a median particle size (d50) below 1 μm.

In one embodiment, said β-SiC have a median particle size d50 from 30 nm to about 40 nm, such as from 32 nm to about 40 nm.

In one embodiment, said α-SiC particles have:

i. a median particle size d50 from about 200 nm to about 500 nm, such as a d50 of about 200 nm to about 400 nm, such as a d50 of about 250 nm to about 350 nm, such as a d50 of about 270 nm to about 320 nm, such as a d50 of about 300 nm;
ii. a d10 particle size from about 1.2 nm to about 200 nm, such as from about 20 nm to about 120 nm, such as from about 50 nm to about 110 nm; and
iii. a d90 particle size from about 700 nm to about 1.5 μm, such as from 800 nm to about 1.3 μm, such as from about 1.0 μm to about 1.3 μm, such as about 1.2 μm.

In one embodiment, the membrane is obtained from sintering a mixture of ceramic particles comprising or consisting of:

a. β-SiC particles having a median particle size d50 from 30 nm to about 40 nm or from 32 nm to about 40 nm, and

b. $\alpha$-SiC particles having a median particle size d50 from about 200 nm to about 500 nm, or from about 270 nm to about 320 nm or of about 300 nm; a d10 particle size from about 50 nm to about 110 nm, or about 100 nm; and a d90 particle size 1.0 $\mu$m to about 1.3 $\mu$m, such as about 1.2 $\mu$m.

Particle size and particle size distribution can be determined in multiple ways as it will be known to someone of skill in the art. For example: Dynamic light scattering (DLS), laser diffraction, sieve analysis, electron microscopy or imaging techniques. In one embodiment, the particle size is measure by dynamic light scattering (DLS).

In one embodiment, the weight ratio between said $\beta$-SiC and $\alpha$-SiC in the membrane is below 0.67, such as 0.5, such as 0.4, such as 0.35, such as 0.30, such as for example 0.25. In one embodiment, the weight ratio between said $\beta$-SiC and $\alpha$-SiC in the membrane is about 0.25.

In one embodiment, the membrane comprises grains of size up to about 5 $\mu$m, such as from about 2 $\mu$m to about 0.01 $\mu$m, such as from about 1 $\mu$m to about 0.1 $\mu$m.

The examples confirm that the membrane according to the present disclosure comprises two crystalline phases of SiC, $\beta$-SiC and $\alpha$-SiC. The presence of crystalline phases of SiC may be assessed by X-ray diffraction, as measured as known in the art, e.g by Cu K$\alpha$ radiation.

In one embodiment, the membrane exhibits at least X-ray lines (2-theta values) in an X-ray diffraction pattern:

i) corresponding to $\beta$-SiC at 2-theta values of 35.6°, 41.4°, 60°, 71.8°, and 75.5°; and;
ii) corresponding to $\alpha$-SiC at 2-theta values 34°, 36°, 38°, 41.5°, 45°, 55°, 60°, 66°, 72°, 73.5°, and 75.5°;

when measured using a Cu K$\alpha$ radiation.

In one embodiment, the membrane has a pure water permeance from about 400 L h-1 m-2 bar-1 to about 600 L h-1 m-2 bar-1 measured at 25 °C and at a pressure difference where delta P is a linear function to the flux.

In one embodiment, said membrane comprises one or more further ceramic materials selected from ceramic oxides, such as alumina, zirconia, spinel (a combination of magnesium and aluminum oxides), mullite (a combination of aluminum and silicon oxides); ceramic non-oxides, such as carbides, borides, nitrides, silicates and suicides; and combinations and compositions thereof.

In one embodiment, the membrane comprises one or more further ceramic materials selected from alumina, zirconia, titania, boron nitride, silica, mullite, silicon carbide (SiC), and combinations thereof.

In one embodiment, said membrane is substantially of made of ceramic material preferably mainly of silicon carbide ceramic. In one embodiment, the membrane comprises at least about 90 % by weight of silicon carbide ceramic material, such as at least about 95 % by weight of silicon carbide ceramic, such as at least about 98 % by weight of silicon carbide ceramic.

*Supporting layer*

In one embodiment, the ceramic filter according to the present disclosure further comprising at least one supporting layer. In one embodiment, the ceramic filter according to the present disclosure further comprises one or more supporting layer(s). The supporting layer may serve for example as a substrate and support to deposit the membrane layer.

In one embodiment, said one or more supporting layers comprise a maximum pore size diameter which is equal to or larger than the maximum pore size diameter of the membrane, said one or more supporting layers preferably comprise a maximum pore size diameter which is substantially larger, such as at least 2 times larger than said maximum pore size diameter of the membrane.

In one embodiment, said one or more supporting layers have a porosity which is equal to or larger than the porosity of the membrane, preferably said one or more supporting layers have a porosity which is substantially equal to the porosity of the membrane.

In one embodiment, said one or more supporting layers comprise a first supporting layer in contact with the membrane and a second supporting layer in contact with said first supporting layer, said first supporting layer having a maximum pore size diameter which is larger than said maximum pore size diameter of the membrane and said second supporting layer having a maximum pore size diameter which is larger than said maximum pore size diameter of said first supporting layer.

In one embodiment, said one or more supporting layers comprise a first supporting layer in contact with the membrane and a second supporting layer in contact with said first supporting layer, said first supporting layer having a porosity which is substantially equal to or larger than said porosity of the membrane and said second supporting layer having a porosity which is substantially equal to or larger than said porosity of said first supporting layer.

In one embodiment, said second supporting layer has an average pore size (d50) of around 10 to 50 $\mu$m, such as 10 to 40 $\mu$m, such as 10 to 30 $\mu$m, such as 10 to 20 $\mu$m, such as about 15 $\mu$m.

In one embodiment, said second layer has a porosity of 20 to 80%, such as about 20% to 60%, such as about 40%.

In one embodiment, the ceramic filter according to the present disclosure comprises a supporting layer - membrane interface forming a common boundary between said supporting layer and the membrane, said supporting layer - membrane interface preferably having a thickness which is less than about 10 $\mu$m, such as less than about 1 $\mu$m.

In one embodiment, the ceramic filter according to the present disclosure comprises at least one a supporting layer - supporting layer interface forming a common boundary between two different supporting layers, said supporting layer- supporting layer interface preferably having a thickness which is less than about 10 $\mu$m, such as less than about 1 $\mu$m.

In one embodiment, the ceramic filter according to the present disclosure comprises one or more supporting layers, wherein each instance of said one or more supporting layers independently has a thickness of 1 $\mu$m or more, such as about 10 $\mu$m or more, such as about 50 $\mu$m or more, such as about 100 $\mu$m or more, such as about 200 $\mu$m or more, such as up to about 10 mm, such as from about 50 $\mu$m to about 5 mm.

In one embodiment, the ceramic filter according to the present disclosure comprises one or more supporting layers, wherein each instance of said one or more supporting layers independently has a thickness of about 1 $\mu$m or more, such as about 10 $\mu$m or more, such as about 50 $\mu$m or more, such as about 100 $\mu$m or more, such as about 200 $\mu$m or more, such as 1 mm or more, such as up to about 20 mm, such as from about 1 mm to about 10 mm, such as about 6 mm.

In one embodiment, said first supporting layer or said second supporting layer, comprises silicon carbide, and/or another ceramic material, such as alumina, zirconia, titania, boron nitride, silica, mullite and combinations thereof. In one embodiment, said first supporting layer or said second supporting layer, consist of silicon carbide, and/or another ceramic material, such as alumina, zirconia, titania, boron nitride, silica, mullite and combinations thereof.

In one embodiment, said first supporting layer or said second supporting layer, comprises silicon carbide, such as silicon carbide coated onto ceramic particles of silicon carbide and/or coated onto ceramic particles of alumina, zirconia, titania, boron nitride, silica, mullite, or any combination thereof.

In one embodiment, the ceramic filter according to the present disclosure comprises at least one supporting layer comprising a 3-dimensional network of interconnected voids surrounded by a web, said web being of a ceramic material.

In one embodiment, the ceramic filter according to the present disclosure comprises at least one supporting layer which supporting layer interpenetrates partly into the membrane.

In one embodiment, the ceramic filter according to the present disclosure is configured for dead-end filtration or cross-flow filtration.

In one embodiment, the membrane comprises one or more lumens for the liquid. In one embodiment, the ceramic filter comprises one or more lumens for the liquid.

In one embodiment, the membrane is a monotube membrane. In one embodiment, the ceramic filter is a monotube ceramic filter.

In one embodiment, wherein the membrane is a multichannel tubular membrane. In one embodiment, the ceramic filter is a multichannel tubular filter.

In one embodiment, the membrane is a disc membrane. In one embodiment, the ceramic filter is a disc membrane.

In one embodiment, the liquid is an aqueous suspension. In one embodiment, the liquid comprises contaminants which are insoluble in said liquid.

*A method of producing a membrane*

The present inventors demonstrate a method of producing SiC ceramic membranes for filters having a small pore size and narrow pore size distribution sintered at low temperatures.

Thus, in one aspect, the present disclosure provides a method of producing a membrane for a ceramic filter, the method comprising:

  a. providing a suspension of a ceramic precursor comprising:

    i. β-SiC particles having a median particle size (d50) below 60 nm, such as from 10 nm to about 50 nm, and

    ii. α-SiC particles having a median particle size (d50) below 1 $\mu$m;

  b. shaping the suspension as a membrane;

  c. drying the homogeneous dispersion in b) to obtain a dry ceramic precursor;

d. sintering the dry ceramic precursor in c) at a temperature from about 1400 °C to about 1600 °C in an inert atmosphere.

In one embodiment, the sintering temperature is between 1400 °C and 1550 °C, such as from 1400 °C to about 1450 °C, such as from 1450 °C to about 1475 °C, such as from 1475 °C to about 1500 °C, such as from 1500 °C to about 1525 °C, such as from 1525 °C to about 1550 °C. In one embodiment, the sintering temperature is from about 1400 °C to 1500 °C. In one embodiment, the sintering temperature is from about 1400 °C to 1500 °C. In one embodiment, the sintering temperature is from about 1450 °C to 1500 °C. These temperaturesa are substantially lower than conventional temperatures used in sintering SiC materials for ceramic membrane preparation, which makes the process less energy-intensive and more cost-efficient.

In one embodiment, step d) is performed for a period of time from about 0,5 h to 12 h. In general, step d) may be performed for any suitable amount of time so as to obtain sufficient sintering of the particles.

In one embodiment, the inert atmosphere consists of an inert gas, such as nitrogen, argon or mixtures thereof; or the inert atmosphere is achieved with a vacuum. In one embodiment, the inert gas does not comprise oxygen gas and/or water vapor.

In one embodiment, the β-SiC particles in step a) have a median particle size d50 from 30 nm to about 40 nm, such as from 32 nm to about 40 nm.

In one embodiment, the α-SiC particles in step a) have :

a. a median particle size d50 from about 200 nm to about 500 nm, such as a d50 of about 200 nm to about 400 nm, such as a d50 of about 250 nm to about 350 nm, such as a d50 270 nm to about 320 nm, such as a d50 of about 300 nm;
b. a d10 particle size from about 1.2 nm to about 100 nm, such as from about 1.2 nm to about 50 nm; and
c. a d90 particle size from about 700 to 950 nm, such as from 800 nm to about 900 nm.

In one embodiment, the ceramic precursor suspension in step a) comprises:

a. β-SiC particles having a median particle size d50 from 30 nm to about 40 nm or from 32 nm to about 40 nm, and
b. α-SiC particles having a median particle size d50 from about 200 nm to about 500 nm, or from about 270 nm to about 320 nm or of about 300 nm; a d10 particle size from about 50 nm to about 110 nm, or about 100 nm; and a d90 particle size 1.0 μm to about 1.3 μm, such as about 1.2 μm.

In one embodiment, the suspension in step a) is a suspension of the ceramic particles of SiC as described herein in an aqueous medium. In one embodiment, the total solid content of the suspension in step a) is from 7% to 11% by weight, such as from 7% to 10% by weight, such as from about 7% to about 8% by weight, such as from 8% to about 9% by weight, such as from about 9% to about 10% by weight. The total solid content of the suspension in step a) refers in one embodiment to the total amount of SiC particles.

In one embodiment, the suspension in step a) is substantially free of particle aggregates. Presence of aggregates may be detected by methods known in the art to assess particle size, such as microscopy techniques or dynamic light scattering techniques.

In one embodiment the suspension in step a) is substantially free of particles aggregates with a particle diameter higher than 1.2 μm.

In one embodiment, the suspension in step a) comprises an organic binder, such as an organic polymer or a polysaccharide. In one embodiment, the binder is selected from the group consisting of: polysaccharide dicarbonic acid polymer, poly(vinyl alcohol) (PVA), or poly(vinyl pyrrolidone) (PVP). An example of polysaccharide dicarbonic acid may in one embodiment be commercially available Optapix CS-76. The amount of binder may be optimized by a person of skill in the art. In one embodiment, the suspension in step a) comprises a binder as described herein, such as in an amount from 0.1 to 5% by weight, such as about 1% by weight.

In one embodiment, the ceramic precursor suspension in step a) comprises a dispersant, such as a polyester or a synthetic polyelectrolyte. The dispersant is dissolved in the aqueous suspension. Examples of polyester will be known to someone of skill in the art, for example, in one embodiment the dispersant is commercially available polyester dispersant KD-7. Example of polyelectrolyte dispersants for preparation of ceramic membranes will be known in the art, for example, in one embodiment the dispersant is commercially available Produkt-KV5088, a commercial polyelectrolyte. In one embodiment, the suspension in step a) comprises the dispersant in an amount from 0.1% to 5% by weight such a from 1% to 2% by weight.

In one embodiment, the method for producing a membrane for a ceramic filter as described herein, further comprises a heat treating step e) after step d), said heat treating step comprising treatment at a temperature between 600 °C to 1000 °C, such as from 600 °C to 900 °C, such as from 600 °C to 800 °C, such as from 600 °C to 700 °C for a time from about 0.5 hours to about 12 h.

In one embodiment, the heat treating step e) is performed under an oxidative atmosphere, such as ambient air, or gas mixtures comprising oxygen, such mixtures of oxygen with an inert gas. The heat treating step e) performed under an oxidative atmosphere eliminates free carbon that may be present in the ceramic from the sintering under inert atmosphere and may thus improve its hydrophilicity.

To further facilitate efficient, robust, and stable filtration, the membrane is advantageously essentially free of free carbon (C).

In one embodiment, step b) comprises providing at least one support layer and shaping the suspension in a) onto said support. The support layer is in one embodiment as described herein in the section "Supporting layer".

In one aspect, the present disclosure provides a ceramic filter obtained by the method according as describe herein above.

*A filter system*

In yet another aspect, the present disclosure provides for a filter system comprising the ceramic filter as described herein, a feeding pipe for feeding liquid into the ceramic filter and/or a permeate pipe for withdrawing filtered liquid and at least one liquid pump connected to said feeding pipe and/or to said permeate pipe.

In one embodiment, the ceramic filter is configured for cross-flow filtration or dead-end filtration.

In one embodiment said ceramic filter comprises a filter inflow end and a filter outflow end, said liquid pump being arranged to provide a pressure difference over said ceramic filter to provide a liquid flow from said filter inflow end to said filter outflow end, said liquid pump preferably being capable of providing a pressure difference over said ceramic filter to provide a liquid flow from said filter inflow end to said filter outflow with a primed water flux of at least about 400 L h-1 m-2 bar-1, measured at 25 °C and at a pressure difference where delta P is a linear function to the flux, preferably the primed water flux between about 400 to 600 L h-1 m-2 bar-1.

In one embodiment, the liquid is an aqueous suspension comprising contaminates substantially insoluble in said liquid.

*A method of filtering a liquid*

In another aspect, the present disclosure provides for a method of filtering a liquid through a ceramic filter as described herein, or the filter system as describe herein, thereby obtaining a filtrate.

In one embodiment, the liquid is an aqueous suspension comprising contaminates which are substantially insoluble in said liquid.

**Items**

1. A ceramic filter for filtration of liquid, the filter comprising at least one membrane said membrane comprising:

   a. a mixture of β-SiC and α-SiC phases; and
   b. pores with a maximum pore size of at most 120 nm and a pore size distribution having a d50 from about 40 nm to about 90 nm, and a d90 from about 60 nm to 100 nm.

2. A ceramic filter for filtration of liquid, the filter comprising at least one membrane obtained from sintering a mixture of ceramic particles comprising or consisting of:

   a. β-SiC particles having a median particle size (d50) below 60 nm, such as from 10 nm to about 50 nm, and
   b. α-SiC particles having a median particle size (d50) below 1 μm.

3. The ceramic filter of any one of the preceding items, wherein the membrane has a median pore size (d50) from about 50 nm to about 90 nm, such as from about 50 nm to about 60 nm, such as from about 60 nm to 70 nm, such as from about 70 nm to about 80 nm, such as from about 80 nm to about 90 nm.

4. The ceramic filter of any one of the preceding items, wherein the membrane has a maximum pore size of 110 nm or less, such as 105 nm or less.

5. The ceramic filter of any one of the preceding items, that d90 is from about 70 nm to 100 nm, such as from 70 nm to 75 nm, such as from 75 nm to about 80 nm, such as from about 80 nm to about 85 nm, such as about 85 nm to about 90 nm, such as from about 90 nm to about 95 nm, such as from about 95 nm to about 100 nm.

6. The ceramic filter of any one of the preceding items, wherein the membrane has a pore size distribution such that the pores have a d50 from about 65 nm to about 90 nm, and a d90 from about 70 to about 100 nm.

7. The ceramic filter of any one of the preceding items, the membrane has a pore size distribution such that the ratio between d90 and d50 (d90:d10) is of less than 1.2, such as less than 1.15, such as about 1.10 or about 1.05.

8. The ceramic filter of any one of the preceding items, wherein the mean pore size and/or the mean pore size distribution is measured by capillary flow porosimetry.

9. The ceramic filter of any one of the preceding items, wherein the membrane has a thickness of 5 to 20 $\mu$m, such as from about 8 to 14 $\mu$m $\pm$ 1.4$\mu$m .

10. The ceramic filter of any one of the preceding items, wherein said $\beta$-SiC particles have a median particle size d50 from 30 nm to about 40 nm, such as from 32 nm to about 40 nm.

11. The ceramic filter of any one of the preceding items, wherein said $\alpha$-SiC particles have:

> a. a median particle size d50 from about 200 nm to about 500 nm, such as a d50 of about 200 nm to about 400 nm, such as a d50 of about 250 nm to about 350 nm, such as a d50 of about 270 nm to about 320 nm, such as a d50 of about 300 nm;
> b. a d10 particle size from about 1.2 nm to about 200 nm, such as from about 20 nm to about 120 nm, such as from about 50 nm to about 110 nm;
> c. a d90 particle size from about 700 nm to about 1.5 $\mu$m, such as from 800 nm to about 1.3 $\mu$m, such as from about 1.0 $\mu$m to about 1.3 $\mu$m, such as about 1.2 $\mu$m.

12. The ceramic filter of any one of the preceding items, wherein the weight ratio between said $\beta$-SiC and $\alpha$-SiC in the membrane is below 0.67, such as 0.5, such as 0.4, such as 0.35, such as 0.30, such as for example 0.25.

13. The ceramic filter of any one of the preceding items, the membrane comprises grains of size up to about 5 $\mu$m, such as from about 2 $\mu$m to about 0.01 $\mu$m, such as from about 1 $\mu$m to about 0.1 $\mu$m.

14. The ceramic filter of any one of the preceding items, wherein the membrane exhibits at least X-ray lines (2-theta values) in an X-ray diffraction pattern:

> i) corresponding to $\beta$-SiC at 2-theta values of 35.6°, 41.4°, 60°, 71.8°, and 75.5°; and;
> ii) corresponding to $\alpha$-SiC at 2-theta values 34°, 36°, 38°, 41.5°, 45°, 55°, 60°, 66°, 72°, 73.5°, and 75.5°,

when measured using a Cu K$\alpha$ radiation.

15. The ceramic filter of any one of the preceding items, wherein the membrane has a pure water permeance from about 400 L h$^{-1}$ m$^{-2}$ bar$^{-1}$ to about 600 L h$^{-1}$ m$^{-2}$ bar$^{-1}$ measured at 25 °C and at a pressure difference where delta P is a linear function to the flux.

16. The ceramic filter of any one of the preceding items, wherein said membrane comprises one or more further ceramic materials selected from ceramic oxides, such as alumina, zirconia, spinel (a combination of magnesium and aluminum oxides), mullite (a combination of aluminum and silicon oxides); ceramic non-oxides, such as carbides, borides, nitrides, silicates and suicides; and combinations and compositions thereof.

17. The ceramic filter of any one of the preceding items, wherein the membrane comprises one or more further ceramic materials selected from alumina, zirconia, titania, boron nitride, silica, mullite, silicon carbide (SiC), and combinations thereof.

18. The ceramic filter of any one of the preceding items, wherein said membrane comprises at least about 90 % by weight of silicon carbide ceramic material, such as at least about 95 % by weight of silicon carbide ceramic material, such as at least about 98 % by weight of silicon carbide ceramic material.

19. The ceramic filter of any one of the preceding items, further comprises one or more supporting layer.

20. The ceramic filter of any one of the preceding items, wherein said one or more supporting layers comprise a maximum pore size diameter which is equal to or larger than said maximum pore size diameter of the membrane, said one or more supporting layers preferably comprise a maximum pore size diameter which is substantially larger, such as at least 2 times larger than said maximum pore size diameter of the membrane.

21. The ceramic filter of any one of the preceding items, wherein said one or more supporting layers comprise a porosity which is equal to or larger than said porosity of the membrane, preferably said one or more supporting layers comprise a porosity which is substantially equal to the porosity of the membrane.

22. The ceramic filter of any one of the preceding items, wherein said one or more supporting layers comprise a first supporting layer in contact with the membrane and a second supporting layer in contact with said first supporting layer, said first supporting layer having a maximum pore size diameter which is larger than said maximum pore size diameter of the membrane and said second supporting layer having a maximum pore size diameter which is larger than said maximum pore size diameter of said first supporting layer.

23. The ceramic filter of any one of the preceding items, wherein said one or more supporting layers comprise a first supporting layer in contact with the membrane and a second supporting layer in contact with said first supporting layer, said first supporting layer having a porosity which is substantially equal to or larger than said porosity of the membrane and said second supporting layer having a porosity which is substantially equal to or larger than said porosity of said first supporting layer.

24. The ceramic filter of any one of the preceding items, wherein said second supporting layer has an average pore size (d50) of around 10 to 50 $\mu$m, such as 10 to 40 $\mu$m, such as 10 to 30 $\mu$m, such as 10 to 20 $\mu$m, such as about 15 $\mu$m.

25. The ceramic filter of any one of the preceding items, wherein said second supporting layer has a porosity of 20 to 80%, such as about 20% to 60%, such as about 40%.

26. The ceramic filter of any one of the preceding items, wherein said filter comprises a supporting layer - membrane interface forming a common boundary between said supporting layer and the membrane, said supporting layer - membrane interface preferably having a thickness which is less than about 10 $\mu$m, such as less than about 1 $\mu$m.

27. The ceramic filter of any one of the preceding items, wherein said filter comprises at least one a supporting layer-supporting layer interface forming a common boundary between two different supporting layers, said supporting layer - supporting layer interface preferably having a thickness which is less than about 10 $\mu$m, such as less than about 1 $\mu$m.

28. The ceramic filter of any one of the preceding items, wherein said filter comprises one or more supporting layers, wherein each instance of said one or more supporting layers independently has a thickness of 1 $\mu$m or more, such as about 10 $\mu$m or more, such as about 50 $\mu$m or more, such as about 100 $\mu$m or more, such as about 200 $\mu$m or more, such as up to about 10 mm, such as from about 50 $\mu$m to about 5 mm.

29. The ceramic filter of any one of the preceding items, wherein said filter comprises one or more supporting layers, wherein each instance of said one or more supporting layers independently has a thickness of about 1 $\mu$m or more, such as about 10 $\mu$m or more, such as about 50 $\mu$m or more, such as about 100 $\mu$m or more, such as about 200 $\mu$m or more, such as 1 mm or more, such as up to about 20 mm, such as from about 1 mm to about 10 mm, such as about 6 mm.

30. The ceramic filter of any one of the preceding items, wherein said first supporting layer or said second supporting layer, comprises silicon carbide, and/or another ceramic material, such as alumina, zirconia, titania, boron nitride, silica, mullite and combinations thereof.

31. The ceramic filter of any one of the preceding items, wherein said first supporting layer or said second supporting layer, comprises silicon carbide, such as silicon carbide coated onto ceramic particles of silicon carbide and/or coated onto ceramic particles of alumina, zirconia, titania, boron nitride, silica, mullite, or any combination thereof.

32. The ceramic filter of any one of the preceding items, wherein said filter comprises at least one supporting layer comprising a 3-dimensional network of interconnected voids surrounded by a web, said web being of a ceramic material.

33. The ceramic filter of any one of the preceding items, wherein said filter comprises at least one supporting layer which supporting layer interpenetrates partly into the membrane.

34. The ceramic filter of any one of the preceding items, wherein the said filter is configured for dead-end filtration or cross-flow filtration.

35. The ceramic filter of any one of the preceding items, wherein the membrane comprises one or more lumens for the liquid.

36. The ceramic filter of any one of the preceding items, wherein the membrane is a monotube membrane.

37. The ceramic filter of any one of the preceding items, wherein the membrane is a multichannel tubular membrane.

38. The ceramic filter of any one of the preceding items, wherein the membrane is a disc membrane.

39. The ceramic filter of any one of the preceding items, wherein the liquid is an aqueous suspension.

40. The ceramic filter according to any one of the preceding items, wherein the liquid comprises contaminates which are insoluble in said liquid.

41. A method of producing a membrane for a ceramic filter, the method comprising:

    a. providing a suspension of a ceramic precursor comprising:

        i. $\beta$-SiC particles having an median particle size (d50) below 60 nm, such as from 10 nm to about 50 nm, and
        ii. $\alpha$-SiC particles having a median particle size (d50) below 1 $\mu$m;

    b. shaping the suspension as a membrane;
    c. drying the homogeneous dispersion in b) to obtain a dry ceramic precursor;
    d. sintering the dry ceramic precursor in c) at a temperature from about 1400 °C to about 1600 °C in an inert atmosphere.

42. The method according to item 41, wherein the sintering temperature is between 1400 °C and 1550 °C, such as from 1400 °C to about 1450 °C, such as from 1450 °C to about 1475 °C, such as from 1475 °C to about 1500 °C, such as from 1500 °C to about 1525 °C, such as from 1525 °C to about 1550 °C.

43. The method according to any one of items 41 to 42, wherein the sintering temperature is from about 1450 °C to about 1500 °C.

44. The method according to any one of items 41 to 43, wherein step d) is performed for a period of time from about 0.5 h to 12 h.

45. The method according to any one of items 41 to 44, wherein the inert atmosphere consist of an inert gas, such as nitrogen, argon or mixtures thereof; or the inert atmosphere is achieved with a vacuum.

46. The method according to any one of items 41 to 45, wherein the $\beta$-SiC particles have a median particle size d50 from 30 nm to about 40 nm, such as from 32 nm to about 40 nm.

47. The method according to any one of items 41 to 46, wherein the $\alpha$-SiC particles have:

    a. a median particle size d50 from about 200 nm to about 500 nm, such as a d50 of about 200 nm to about 400 nm, such as a d50 of about 250 nm to about 350 nm, such as a d50 270 nm to about 320 nm, such as a d50 of about 300 nm;
    b. a d10 particle size from about 1.2 nm to about 100 nm, such as from about 1.2 nm to about 50 nm; and
    c. a d90 particle size from about 700 to 950 nm, such as from 800 nm to about 900 nm.

48. The method according to any one of items 41 to 47, wherein the suspension in step a) is a suspension in an aqueous medium.

49. The method according to any one of items 41 to 48, wherein the total solid content of the suspension in step a) is from 7% to 11%, such as from 7% to 10% by weight, such as from about 7% to about 8% by weight, such as from 8% to about 9% by weight, such as from about 9% to about 10% by weight.

50. The method according to any one of items 41 to 49, wherein the weight ratio between said $\beta$-SiC particles and $\alpha$-SiC particles is below 0.67, such as 0.5, such as 0.4, such as 0.35, such as 0.30, such as for example 0.25.

51. The method according to any one of items 41 to 50, wherein the suspension in step a) is substantially free of particle aggregates.

52. The method according to any one of items 41 to 51, wherein the suspension in step a) is substantially free of particles aggregates with a particle diameter higher than 1.2 $\mu$m.

53. The method according to any one of items 41 to 52, wherein the suspension in step a) comprises an organic binder, such as an organic polymer or a polysaccharide.

54. The method according to any one of items 41 to 53, wherein the binder is selected from the group consisting of: polysaccharide dicarbonic acid polymer, poly(vinyl alcohol) (PVA), or poly(vinyl pyrrolidone) (PVP).

55. The method according to any one of items 41 to 54, wherein the suspension in step a) comprises the binder as in an amount from 0.1 to 5% by weight.

56. The method according to any one of items 41 to 55, wherein the suspension in step a) comprises a dispersant, such as a polyester or a synthetic polyelectrolyte.

57. The method according to any one of items 41 to 56, wherein the suspension in step a) comprises the dispersant in an amount from 0.1% to 5% by weight such a from 1% to 2% by weight.

58. The method according to any one of items 41 to 57, wherein further comprising a heat treating step e) after step d), said heat treating step comprising treatment at a temperature between 600 °C to 1000 °C, such as from 600 °C to 900 °C, such as from 600 °C to 800 °C, such as from 600 °C to 700 °C for a time from about 0.5 hours to about 12 h.

59. The method according to any one of items 41 to 58, wherein the heat treating step e) is performed under an oxidative atmosphere, such as ambient air, or gas mixtures comprising oxygen, such mixtures of oxygen with an inert gas.

60. The method according to any one of items 41 to 59 wherein step b) comprises providing at least one support layer and shaping the suspension in a) onto said support.

61. The method according to any one of items 41 to 60, wherein at least one support layer is as defined in any one of items 19 to 33.

62. The method according to any one of items 41 to 61, wherein the ceramic filter is as described in any one of items 1 to 40.

63. A ceramic filter comprising a membrane obtained by the method according to any one of items 41 to 62.

64. A filter system comprising the ceramic filter according to any one items 1 to 40 or 63, a feeding pipe for feeding liquid into the ceramic filter and/or a permeate pipe for withdrawing filtered liquid and at least one liquid pump connected to said feeding pipe and/or to said permeate pipe.

65. The filter system according to item 64, wherein the ceramic filter is configured for cross-flow filtration or dead-end filtration.

66. The filter system according to any one of items 64 to 65, wherein said ceramic filter comprises a filter inflow end and a filter outflow end, said liquid pump being arranged to provide a pressure difference over said ceramic filter to provide a liquid flow from said filter inflow end to said filter outflow end, said liquid pump preferably being capable of providing a pressure difference over said ceramic filter to provide a liquid flow from said filter inflow end to said filter outflow with a primed water flux of at least about 400 L h$^{-1}$ m$^{-2}$ bar$^{-1}$, measured at 25 °C and at a pressure difference where delta P is a linear function to the flux, preferably the primed water flux between about 400 to 600 L h$^{-1}$ m$^{-2}$ bar$^{-1}$.

67. A method of filtering a liquid through a ceramic filter according to any one of items 1 to 40 or 63, or the filter system according to any one of items 64 to 66, thereby obtaining a filtrate.

68. The method according to item 67, wherein the liquid is an aqueous suspension comprising contaminates which are substantially insoluble in said liquid.

**Examples**

*Example 1: Preparation of ceramic filters and characterization of surface and membrane quality*

*Aim*

To demonstrate the preparation of ceramic filters according to the present disclosure.

*Materials and Methods*

**Reagents.** Commercially available SiC nanopowder(average size 32-40 nm, where the SiC is primarily polymorph β-SiC) was sourced from Nanomakers, France. SiC sub-micron powder (where the SiC is primarily polymorph α-SiC; d10: 0.1 μm, d50: 0.3 μm, d90:1.2 μm), was purchased from ESK, Germany. As dispering agent for all SiC powders, Hypermer KD-7 (a modified polyester in solvent) was supplied by Croda, Sweden. As binder, Optapix CS-76 (polysaccharide dicarbonic acid polymer) was obtained from Zschimmer & Schwarz, Germany. All chemicals were used as received.

**Support layer and intermediate layer.** The preparation of the support and intermediate layer was prepared as described in literature (E. Eray et al.).

Commercially available SiC flat-sheet discs (diameter of 25 mm, thickness of 6 mm, porosity of 40%, and pore size of 15 μm), supplied from LiqTech Ceramics A/S, Denmark, were used as a membrane support.

On the top of the SiC macroporous support, a SiC layer was applied to serve as an intermediate layer between the SiC macroporous support and the SiC selective membrane layer. Prior to coating, SiC supports were carefully cleaned with acetone and heat-treated at 450 °C for 2 h. Intermediate SiC membrane layer was deposited by dip-coating the SiC support into a colloidal suspension. This coating suspension was prepared by using blend of fine (average particle size of 0.2 μm) and coarse (average particle size of 0.8 μm) α-SiC sub-micron powders (fine/coarse powder mixing ratio 1:4), a synthetic polyelectrolyte Produkt-KV5088 (1 wt.%) as a dispersant, polysaccharide dicarbonic acid polymer, optapix CS-76 (1 wt.%), as a binder, and distilled water.

After coating the SiC supports, SiC intermediate layers were sintered in the range of 1500 °C to 1900 °C for 4h under argon atmosphere. Subsequently, the SiC membranes were heat treated under air to remove the free carbon eventually formed in the pores.

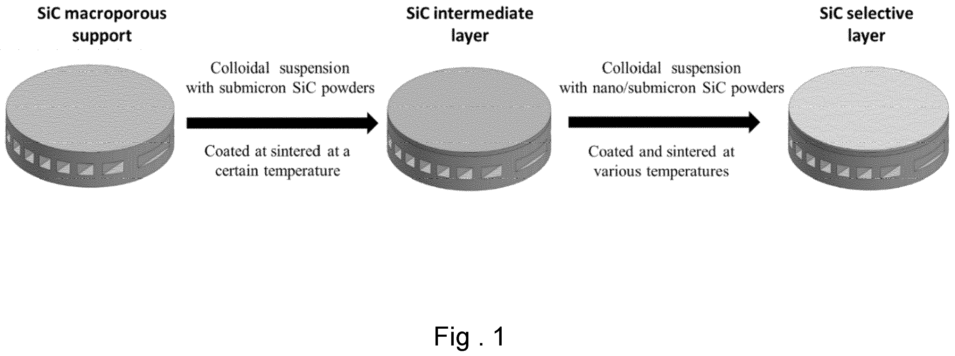

**Membrane layer.** For the preparation of SiC selective membrane layer, coating suspensions were prepared using SiC nano and sub-micron powders, dispersant, binder, and deionized water kept under continuous mechanical stirring with propeller (LLG-uniSTIRRER OH2). Suspensions prepared with diffrerent nano/sub-micron powders mixing ratio (0.25-1.5) and total solid content of 7 wt% - 12 wt%. All suspensions were prepared using the following sequential addition protocol. First, deionized water and 2% of KD-7 (a polyester dispersant) were mixed in a beaker, the SiC nanopowder (β-SiC polymporh) was then added and the suspension was mixed for 5 min. Subsequently, 2% of KD-7 was added to the mixture to disperse the SiC sub-micron powder (α-SiC polymorph) and the suspension was mixed for 5 min. The pH of the suspension was adjusted to 10 by dropwise addition of 1M aqueous NH$_3$. This followed by a 20 min ultrasound treatment at 75 W (Hielscher Ultrasonic Homogenizer *UIP2000hdT).* During this treatment, the beaker containing coating suspension was put into an ice-bath in order to avoid the overheating of suspension. After ultrasound tratment, 1 wt% optapix CS 76 (a polysaccharide binder) was added to the suspension. The suspension was further stirred continuosly with a magnetic stirrer at room temperature. The suspension was coated onto intermediate SiC layer by dip-coating. Thereafter, the prepared SiC membranes were sintered in the range of 1400 °C< T <1700 °C for 4h under argon atmosphere. Finally, the sintered membranes were heat treated at the temperature of 700 °C for 1h to remove the free carbon. A schematic diagram of the fabrication of SiC membrane represented in Fig. 1.

Particle size distributions (PSD) of the coating suspensions were determined by a Microtrac S3500 using dynamic light scattering (DLS) technique

*Results*

The effect of β-SiC nanoparticles and α-SiC sub-micron particles, the total solid content and the sintering temperatures on the prepared membranes was studied. The results are described in the examples below. Details on the variation of parameters during the membrane fabrication are summarized in Table 1. Hereafter, membrane samples will be referred by using their designation as given in the table.

**Table 1.** Membrane designation based on parameters used for optimization of the SiC suspensions.

| Membrane designation | Solid loading[a] (wt%) | β-SiC/α-SiC powder mixing ratio | Sintering temperature (°C) | Membrane layer quality |
|---|---|---|---|---|
| M1 | L: low | 0.25 | - | Not homogenous coverage of the surface |
| M2 | M: medium | 0.25 | - | Homogenous and defect-free |
| M3 | H: high | 0.25 | - | Cracks |
| M4 | M: medium | 0.67 | - | Small cracks |
| M5 | M: medium | 1 | - | Large cracks |
| M6 | M: medium | 1.5 | - | Large cracks and peeling of the layer |
| M7 | M: medium | 0.25 | 1600 °C | Large cracks |
| M8 | M: medium | 0.25 | 1550 °C | Small cracks |
| M9 | M: medium | 0.25 | 1525 °C | No crack and smooth surface |
| M10 | M: medium | 0.25 | 1500 °C | Smooth and defect-free surface |
| M11 | M: medium | 0.25 | 1450 °C | Smooth and defect-free surface |

[a] Solid loading: 5 wt% ≤ low ≤ 7 wt% ≤ medium ≤ 10 wt% ≤ high ≤ 12 wt%

*Conclusion*

Ceramic filters according to the present disclosure were prepared at different solid content, particle ratio and sintering temperature. The effect on the membrane quality (e.g. the surface morphology, presence of defects, targeted porosity, permeability, water flux, mechanical and chemical stability) may accordingly be evaluated.

*Example 2: Effect of solid loading and particle ratio on membrane quality*

*Aim*

To study the effect of the solid loading and particle ratios of ceramic precursors.

*Materials and Methods*

The effect was studied in samples M1 to M6 as described in Table 1. The surface morphology and cross-sectional analysis of the SiC membrane layers were obtained by a FlexSEM 1000 (Hitachi GmbH, Sweden) scanning electron microscope (SEM) operating at an acceleration voltage of 15 kV. Images were taken from different locations to best characterize the membrane. The surface of final membranes was characterized by a Zeiss XB1540 high resolution scanning electron microscopy (HR-SEM) Prior to the HR-SEM analysis, the samples were coated with gold.

*Results*

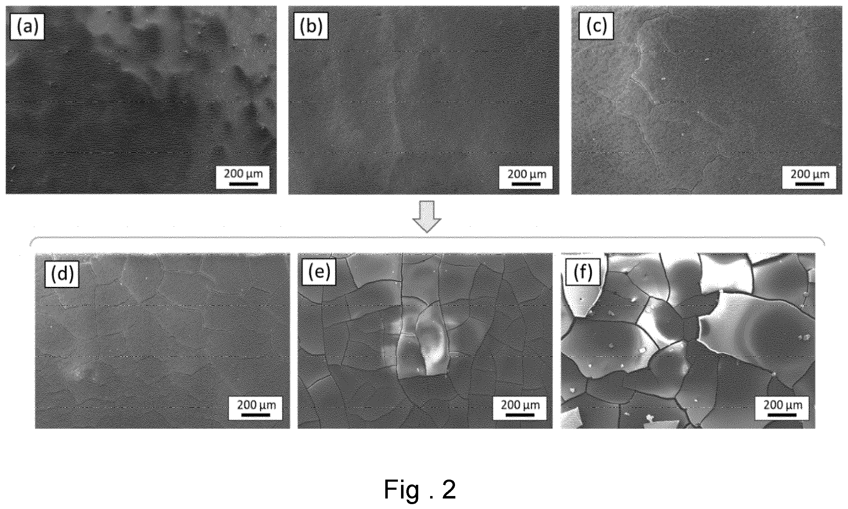

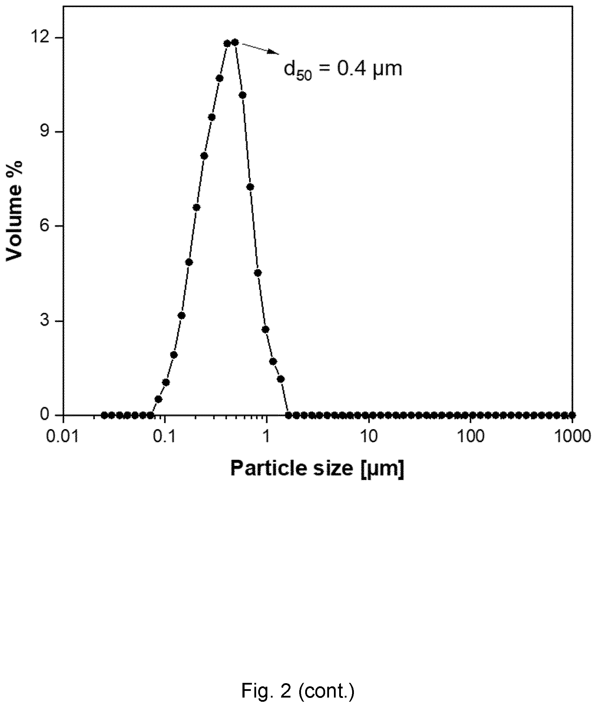

Figure 2 shows SEM images of selective layer surfaces for membranes M1-M6 as described in Table 1. When low solid content was used in the coating suspension, the surface was not homogeneously covered (Fig. 2a), while the membrane produced with high solid content formed cracks (Fig. 2c). As evidence in Fig 2b, the surface of the M2 produced from coating suspension containing medium solid content was homogeneous and smooth without any obvious defects.
It can also be seen that with an increasing β-SiC/α-SiC powder ratio the cracks on the membrane surface are getting bigger, i.e., the cracks are bigger in the case of M6 (Fig.2f, β-SiC/α-SiC ratio of 1.5) compared to M5 (Fig. 8e, β-

SiC/$\alpha$-SiC ratio of 1) and M4 (Fig. 2d, $\beta$-SiC/$\alpha$-SiC ratio of 0.67). The increase of cracking could be attributed due to higher particle agglomeration without presence of agglomerates. At 0.25 $\beta$-SiC/$\alpha$-SiC weight ratio, no agglomeration could be observed (Fig. 2g)

*Conclusion*

It was surprisingly found that an improved membrane quality may be obtained at specific solid loadings and particle ratios, where the membrane is manufactured by wet powder processing. The improvement may particularly be obtained for membrane layers deposited on an intermediate or support layer.

*Example 3: Effect of sintering temperature on surface morphology and membrane quality*

*Aim*

To study of the sintering temperature of the membranes according to the present disclosure.

*Materials and Methods*

The effect of varying sintering temperatures for membranes M7-M11 prepared as described in Table 1 was studied. Surface was characterized as in described in example 2. The quasi-quantitative elemental analysis of the samples was performed on the same SEM equipped with energy dispersive X-ray spectrometer (EDX). The crystallinity the SiC membrane layer was analyzed by X-ray diffraction using an Empyrean diffractometer (PANAnalytical, Netherlands), operated at 45 kV and 40 mA with Cu-K$\alpha$ radiation ($\lambda$ = 1.5418 Å). Scans were carried out in the 2$\theta$ range of 20-90°, using steps of 0.05°.

*Results*

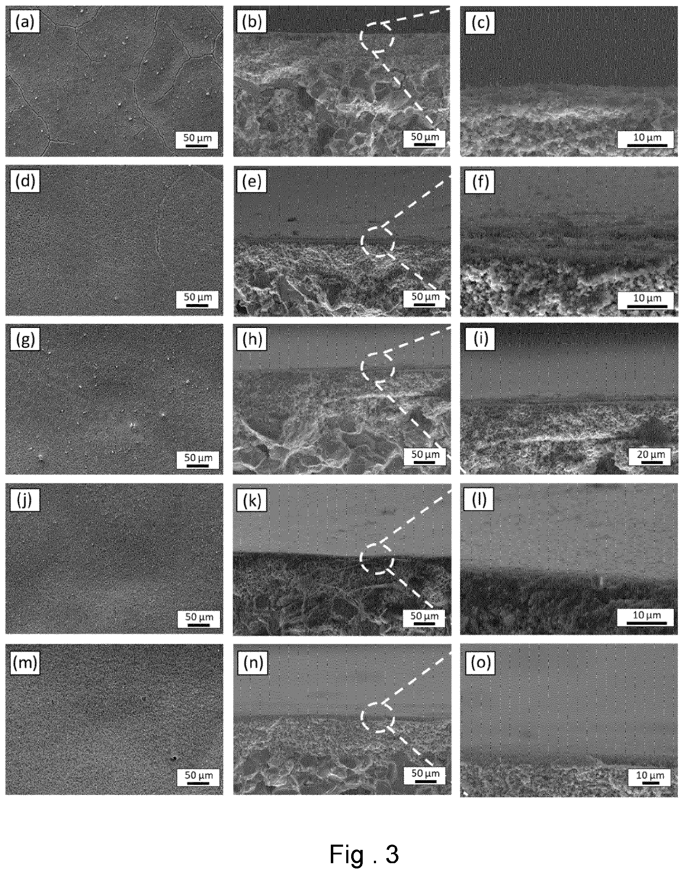

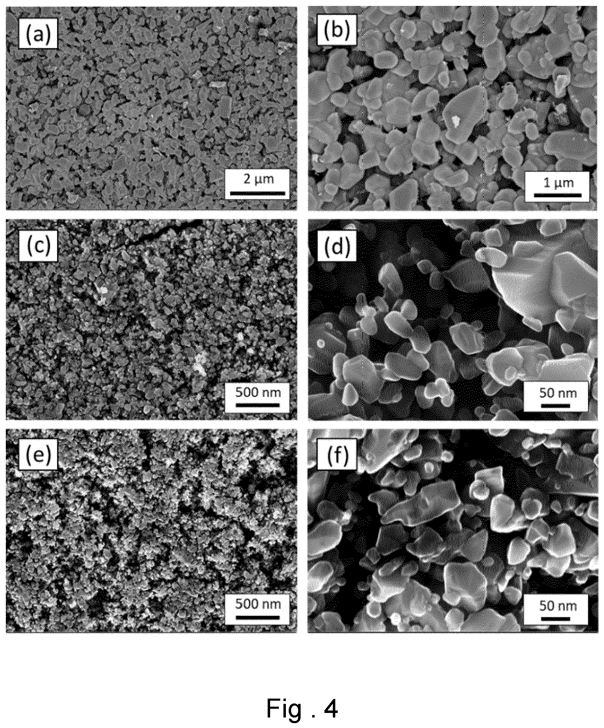

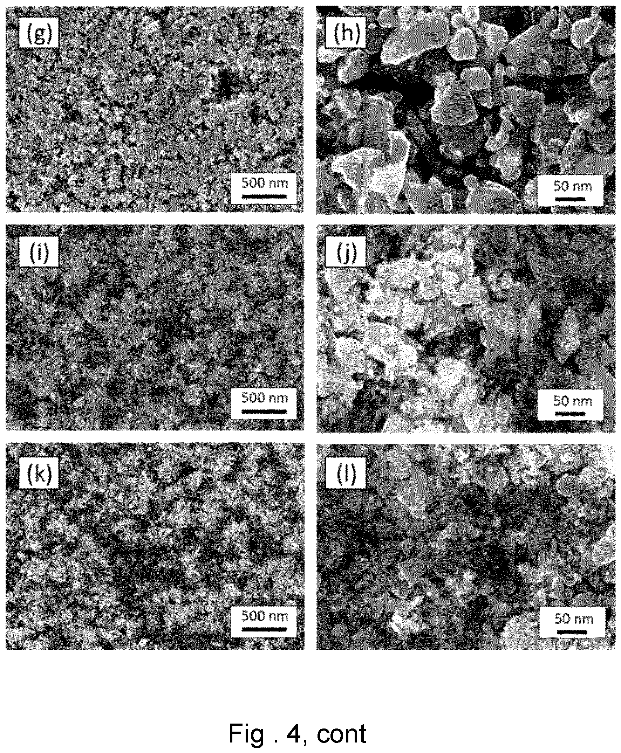

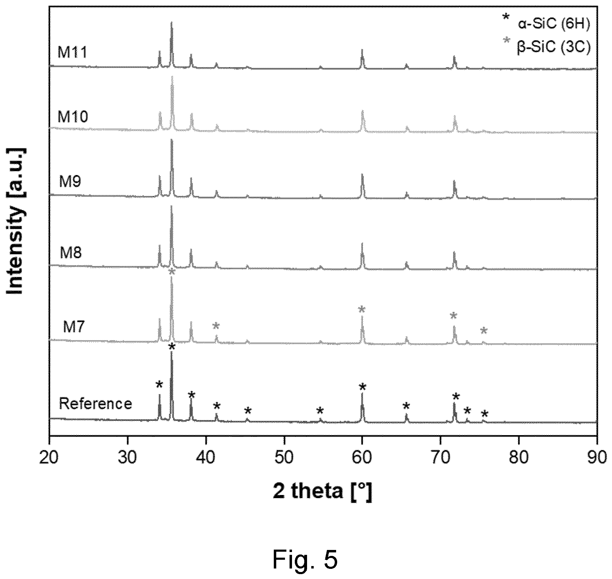

Figure 3 shows the morphology of ceramic membranes M7 to M11. Each membrane was prepared in triplicate.
From the SEM micrographs, it can be clearly seen that 1600 °C was too high for sintering of the SiC nano and sub-micron particles as it caused large crack formation on the surface of the membrane (Fig. 3a). It can also be seen that a decrease of 50 °C in the temperature improved the quality of the layer, but still some small cracks on the membrane surface were observed (Fig. 3d). When temperature was decreased to 1525 °C, membrane layer without visible cracks were obtained (Fig. 3g). Further decrease in temperature to 1500 °C, and 1450 °C resulted in high-quality SiC membrane layers with a smooth cross-section of homogenous microstructure as seen in Fig.3j and 3k for M10 and Fig. 3m and 3n for M11. The cross-section morphologies of the fabricated SiC membranes presented in Fig 3c, 3f, 3i, 3l, and 3o clearly show relatively thin and dense separation layer on top of SiC intermediate layer. In addition, the membrane layer shows good adhesion to the intermediate layer. It is also possible to observe infiltration of the top SiC layers into the pores of the intermediate layer and support (Fig. 3b, 3e, and 3h). This could be due to the larger pores of intermediate layer and support layer than the new SiC membrane layer. For all membranes, the thickness of the membrane layer was found to be in the range 8 to 14 $\mu$m with a standard deviation of $\pm$ 1.4.
The effect of applied sintering temperatures on the structural morphology of the membranes, high resolution SEM were performed, and the results are reported in Fig. 4. (the surface morphology of the SiC intermediate membrane layer was shown in Fig. 4a and 4b for comparing with SiC selective membrane). At 1600, 1500°C, and 1525 °C, the disappearance of the SiC nanoparticles was observed due to the diffusion process from nanoparticles surface to the neck regions. As a result, grain growth and large pores were observed for membranes M7 (Fig. 4c and 4d), M8 (Fig. 4e and 4f), and M9 (Fig. 4g and 4h). At these temperatures, the connection between the grains was clearly visible. When temperature was decreased to 1500 °C and 1450 °C, fine particles and small pores were observed for membranes M10 (Fig. 4i and 4j) and M11 (Fig. 4k and 4l). Moreover, at these two sintering temperatures it is also possible to see joining of SiC particles.
The XRD patterns of the SiC membranes after thermal treatment at different temperatures are shown in Fig. 5. As can be seen from the figure, all XRD patterns of all the SiC membranes are identical. The XRD patterns only showed signals that could be attributed to the $\alpha$-SiC and $\beta$-SiC phases because no phase transformation occurred at all temperatures used in this study. Identified $\alpha$-SiC and $\beta$-SiC 2-thetha (2$\theta$) are shown in Table 2.

**Table 2.** 2θ values identified in the membranes corresponding to α-SiC and β-SiC.

| α-SiC crystalline structure (6H, α-SiC)[a] | | β-SiC crystalline structure (3C, β-SiC)[b] | |
|---|---|---|---|
| (101) | 34° | (111) | 35.6° |
| (102) | 36° | (200) | 41.4° |
| (103) | 38° | (220) | 60° |
| (104) | 41.5° | (311) | 71.8° |
| (105) | 45° | (222) | 75.5° |
| (107) | 55° | | |
| (110) | 60° | | |
| (109) | 66° | | |
| (202) | 72° | | |
| (203) | 73.5° | | |
| (204) | 75.5° | | |
| a: Bonekamp et al.; b: Shimoda et al. | | | |

*Conclusion*

It was surprisingly found that an improved membrane quality may be obtained for membranes manufactured by wet powder processing, where the sintering is configured such that the polymorphs β-SiC and α-SiC of the powder are maintained. Membranes according to the present disclosure comprise both β-SiC and α-SiC phases, and it was surprisingly seen that at selected sintering temperatures they may be sintered successfully to obtain adequate grain and pore formation. The improvement may particularly be obtained for membrane layers deposited on an intermediate or support layer.

*Example 4: Effect of sintering temperature on porosity of the membranes and membrane quality*

*Aim*

To study the effect of sintering temperature in the porosity of membranes prepared according to the conditions M7 to M11 in table 1.

*Materials and Methods*

Capillary flow porometer (3P Instruments, Germany) was used to measure the mean pore sizes and pore size distributions of the SiC membranes. The flat disc samples with an outer diameter of 25 mm were placed in a stainless-steel holder. Prior to measurements, the pores of the membranes were filled with Porofil™ (fluorinated hydrocarbon) wetting liquid having a surface tension of 16 dyn/cm. The wet curve was obtained by measuring nitrogen flow rate through the sample with increasing pressure. Then, the dry curve was measured by increasing the nitrogen pressure through a dry membrane sample.

*Results*

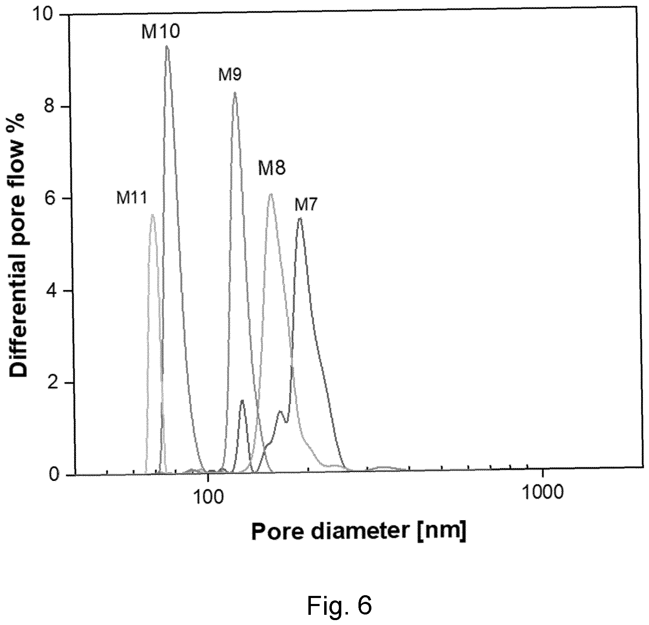

Figure 6 shows changes in the pore size distribution plots of selective SiC membranes sintered at five different temperatures.
In the case of M7, a multi-peaks distribution of the pores size was observed. Such type of pore size distribution can be attributed to the large cracks observed on the membrane surface (Fig. 3a) due to the high sintering temperature. The higher sintering temperatures widened the pore size distribution of the SiC membranes, i.e., M7 and M8. On the contrary, in the cases of M9, M10, and M11, the membranes have sharp pore size distributions. The pore sizes of the membranes on the maximum of the distribution curves were 194, 157, 125, 80, and 70 nm for M7, M8, M9, M10, and M11, respectively. In order to verify reproducibility, three independent samples of each membrane type were analyzed. The mean pore size values had a standard deviation ≤ 14% for M7, M8, and M9. In case of M10 and M11, the standard deviations were ≤ 6% and ≤ 3%, respectively. As it can be seen in the inset of Fig. 6, the average pore sizes of the fabricated SiC membranes were decreased as the sintering temperature decreased.

**Table 3.** Average pore size of prepared membranes based on flow porosimetry.

| Sample | Maximum pore size (nm) | d90 (nm) | d50 (nm) |
|---|---|---|---|
| M11[a] | 81.53 ± 4.90 | 73.8 ± 2.14 | 70.37 ± 2.82 |
| M10[a] | 102.53 ± 7.15 | 90.34 ± 6.14 | 84.7 ± 5.64 |
| M9[b] | 194.3 | 154.4 | 138.5 |
| M8[b] | 249.0 | 179.4 | 158.8 |
| M7[b] | 264.1 | 229.5 | 191.1 |
| a: Values represent average of 7-8 independent samples and are represente ± standard deviation (s.d). b: Values are from a single sample. | | | |

*Conclusion*

These findings show good agreement with the results obtained from high-resolution SEM investigation, revealing that the pore size of the membranes could be precisely tailored via sintering temperature, which consequently affect the permeation properties of the membranes. Narrow pore size distributions could be obtained, which are advantageous for filtration.

*Example 5: Effect of sintering temperature on water flux*

*Aim*

To study the effect of sintering temperature for different membranes prepared according to the parameters for M9 to M11 as described in table 1.

*Materials and Methods*

The pure water permeance of the SiC membranes was measured by a dead-end filtration set-up applying pressures of 0.5, 1, 2, and 3 bar. The pure water permeance of membranes was calculated by Eq. 1, where P is pure water permeance (L $m^{-2}$ $h^{-1}$ $bar^{-1}$), V is volume of collected permeate (L), A is the effective filtration area of SiC membrane ($m^2$), t is the collecting time (h), and $\Delta p$ is the pressure difference between the feed side and the permeate side of the membrane (bar).

$$P = \frac{V}{A * t * \Delta p}$$

*Results*

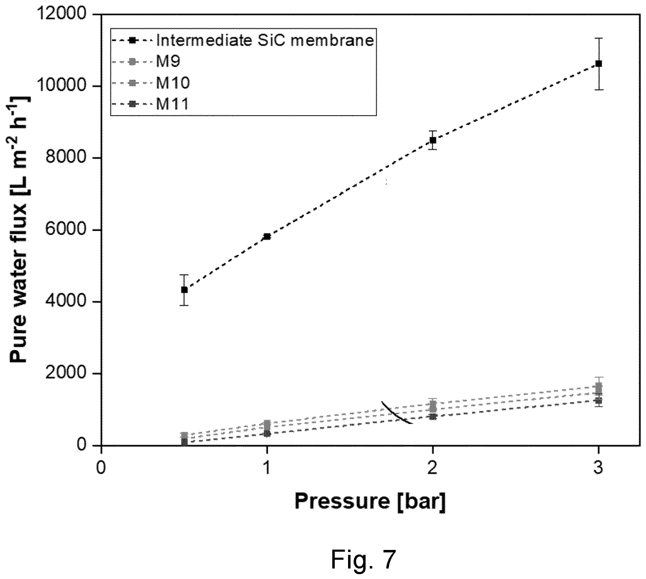

Fig 7 shows pure water fluxes of the produced SiC membranes and the intermediate SiC membrane as a function of applied pressure. The pure water permeability of SiC intermediate layer was found as 2517 ± 33 L $h^{-1}$ $m^{-2}$ $bar^{-1}$. It is observed that the pure water permeance of SiC membranes decrease with a decrease in pore size. The M9 membrane shows the highest pure water permeance of 540 ± 52 L $h^{-1}$ $m^{-2}$ $bar^{-1}$, while M11 membrane has the lowest pure water permeance of 469 ± 34 L $h^{-1}$ $m^{-2}$ $bar^{-1}$. For M10, pure water permeance was calculated as 507 ± 28 L $h^{-1}$ $m^{-2}$ $bar^{-1}$. Water permeability of the intermediate SiC membrane layer was lowered to 78.5 - 81.4% after deposition of selective SiC membrane layer.

*Conclusion*

Membranes according to the present disclosure may provide for good permeability of aqueous fluids.

*Example 6: Chemical and Mechanical stability*

*Aim*

To study the stability of membranes prepared according to the parameters for M10 and M11 as described in Table 1.

*Materials and Methods*

For the chemical resistance tests, the SiC membranes were separately dipped into a 0.25 mol/L $H_2SO_4$ and 0.25 mol/L NaoH at 60 °C. The samples were soaked in the respective solutions for 20 days and then thoroughly rinsed with deionized water for 1h and dried in an oven at 40 °C for 24 h. After 20 days, pore size distribution of the samples was measured, and their surface morphologies were evaluated to see if there is any change.

For thermal shock resistance tests, the SiC membranes were placed into a furnace at 700 °C, where the samples rapidly heated from room temperature to 700 °C and held for 30 min before cooled to room temperature in air. This test was conducted for 20 cycles and each day the pore size distribution of the membranes was measured with a capillary flow porometer.

*Results*

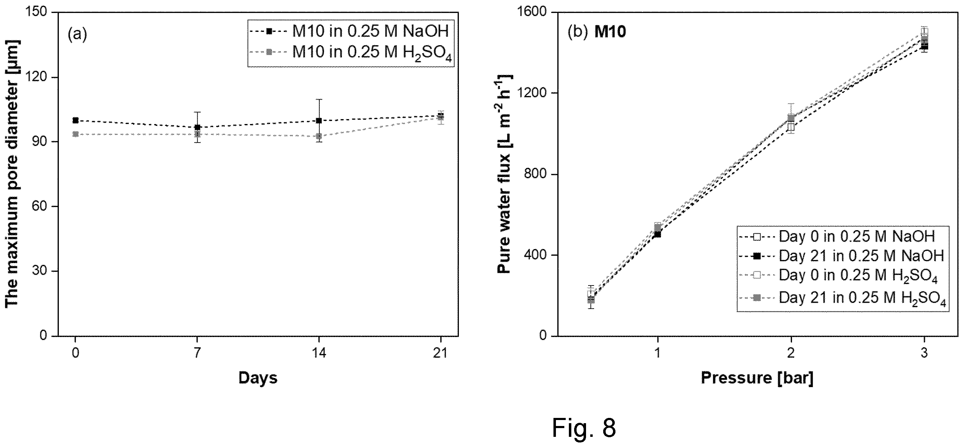

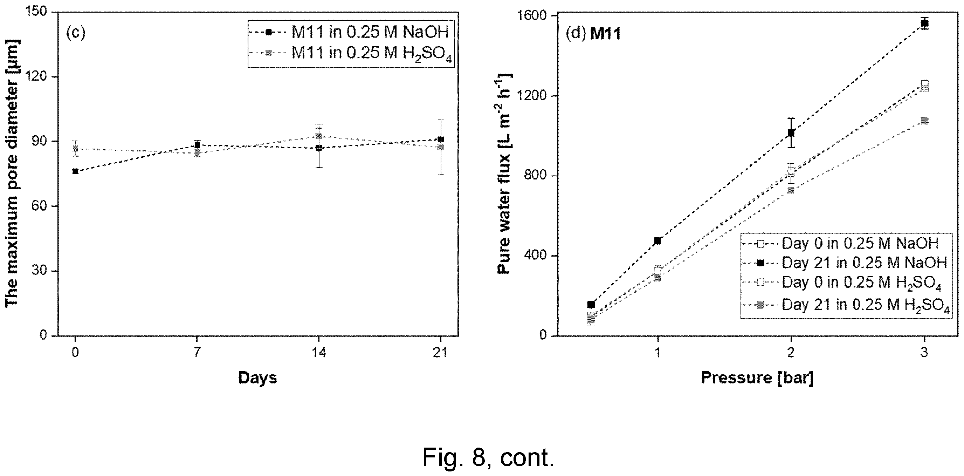

The pore sizes of the membranes were measured weekly, and the results for M10 and M11 are presented in Fig. 8a and 8c, respectively. It was observed that the maximum pore size of the both membranes separately immersed into acidic and alkali solution had not significantly changed, indicating the pore structures of the membrane were stable after 21 days with no evidence of defect formation in the membrane top-layer. The pure water fluxes of the membranes were also measured before and after acid and alkali corrosion. Fig. 8b compares the pure water fluxes of membrane M10 before and after the corrosion resistance test in alkali and acid solutions, while Fig. 8d compares the pure water fluxes of membrane M11 before and after alkali and acid corrosion tests. The pure water permeability of M10 were calculated as 509.6 L $m^{-2}$ $h^{-1}$ $bar^{-1}$ before exposed to alkali solution and were found as 496.8 L $m^{-2}$ $h^{-1}$ $bar^{-1}$ after exposure. Meanwhile, the pure water permeability of M10 was 515.6 L $m^{-2}$ $h^{-1}$ $bar^{-1}$ before immersed into $H_2SO_4$ solution and was 510.5 L $m^{-2}$ $h^{-1}$ $bar^{-1}$ after exposed to $H_2SO_4$ solution. It means that the pure water permeabilities of M10 membranes subjected to acid and alkali solutions were lowered by 1% and 2.5%, respectively, confirming that performance of the membranes remained unaffected after 21 days under acid and alkali exposure. When membrane M11 was immersed into NaOH solution, the pure water permeability of the membrane increased from 470 L $m^{-2}$ $h^{-1}$ $bar^{-1}$ to 558 L $m^{-2}$ $h^{-1}$ $bar^{-1}$. The pure water permeability of the membranes increased by 19.4 % after alkali corrosion test. On the other hand, when M11 membranes were immersed in acid solution, the pure water permeabilities of the acid exposed samples were 12.6% less than that of the unexposed samples

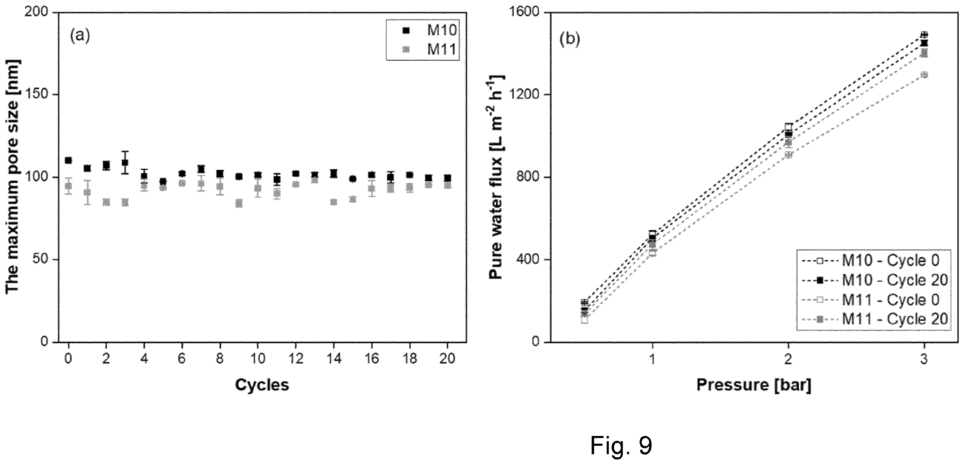

As shown in Fig. 9a, the maximum pore size of M10 and M11 were measured as a function of applied thermal cycles. Pore size measurements were repeated on two samples to verify reproducibility. No significant differences in the maximum pore size were observed when membrane M10 exposed to twenty thermal cycles, which reveals no defects on the membrane surface and no change occurring in the pore structure of the membrane. the maximum pore size of M11 varied between 80 to 100 nm throughout these twenty thermal cycles, pure water fluxes of the membranes were measured (Fig. 9b). The pure water permeability of membrane M10 decreased from 503 L $m^{-2}$ $h^{-1}$ $bar^{-1}$ to 463 L $m^{-2}$ $h^{-1}$ $bar^{-1}$ after twenty thermal cycles, while the pure water permeability of membrane M11 decreased from 467 L $m^{-2}$ $bar^{-1}$ to 380 L $m^{-2}$ $h^{-1}$ $bar^{-1}$, meaning that the pure water permeabilities of M10 and M11 were reduced by 8% and 19%. As expected, higher performance decline was observed for membrane M11 than M10.

*Conclusion*

The membranes according to the present disclosure may show good chemical stability to both acidic and basic conditions and to thermal stress.

**References**

E. Eray, V. Boffa, M.K. Jorgensen, G. Magnacca, V.M. Candelario, Enhanced fabrication of silicon carbide membranes for wastewater treatment: From laboratory to industrial scale, J. Memb. Sci. 606 (2020) 118080. https://doi.org/10.1016/j.memsci.2020.118080. B.C Bonekamp, Preparation of asymmetric ceramic membrane supports by dip-coating, Membrane Science and Technology, Voume 4, 1996, pages 141-225.

Shimoda et al. Surface properties and dispersion behaviors of SiC nanopowders, Colloids and Surfaces A: Physicochemical and Engineering Aspects, Volume 463, 2014, pages 93-100.

**Claims**

1. A ceramic filter for filtration of liquid, the filter comprising at least one membrane said membrane comprising:

   a. a mixture of β-SiC and α-SiC phases; and
   b. pores with a maximum pore size of at most 120 nm and a pore size distribution having a d50 from about 40 nm to about 90 nm, and a d90 from about 60 nm to 100 nm.

2. A ceramic filter for filtration of liquid, the filter comprising at least one membrane obtained from sintering a mixture of ceramic particles comprising or consisting of:

   a. β-SiC particles having an median particle size (d50) below 60 nm, such as from 10 nm to about 50 nm, and
   b. α-SiC particles having an median particle size (d50) below 1 μm.

3. The ceramic filter of any one of the preceding items, wherein the membrane has a maximum pore size of 110 nm or less.

4. The ceramic filter of any one of the preceding items, wherein the weight ratio between said β-SiC and α-SiC in the membrane is below 0.67.

5. The ceramic filter of any one of the preceding items, wherein the membrane exhibits at least X-ray lines (2-theta values) in an X-ray diffraction pattern:

   i) corresponding to β-SiC at 2-theta values of 35.6°, 41.4°, 60°, 71.8°, and 75.5°; and;
   ii) corresponding to α-SiC at 2-theta values 34°, 36°, 38°, 41.5°, 45°, 55°, 60°, 66°, 72°, 73.5°, and 75.5°,

   when measured using a Cu Kα radiation.

6. The ceramic filter of any one of the preceding items, further comprising one or more supporting layer, said one or more supporting layer(s) said first supporting layer or said second supporting layer, comprises silicon carbide, and/or another ceramic material, such as alumina, zirconia, titania, boron nitride, silica, mullite and combinations thereof.

7. A method of producing a membrane for a ceramic filter, the method comprising:

   a. providing a suspension of a ceramic precursor comprising:

      i. β-SiC particles having an median particle size (d50) below 60 nm, such as from 10 nm to about 50 nm, and
      ii. α-SiC particles having a median particle size (d50) below 1 μm;

   b. shaping the suspension as a membrane onto a support layer;
   c. drying the homogeneous dispersion in b) to obtain a dry ceramic precursor;
   d. sintering the dry ceramic precursor in c) at a temperature from about 1400 °C to about 1600 °C in an inert atmosphere.

8. The method according to claim 7, wherein the sintering temperature in step d) is from 1400 °C to 1525 °C.

9. The method according to any one of claims 7 to 8, wherein the ceramic precursor suspension in step a) comprises:

   a. β-SiC particles having a median particle size d50 from 30 nm to about 40 nm or from 32 nm to about 40 nm, and
   b. α-SiC particles having a median particle size d50 from about 200 nm to about 500 nm; a d10 particle size from about 50 nm to about 110 nm; and a d90 particle size 1.0 μm to about 1.3 μm.

10. The method according to any one of claims 7 to 9, wherein the total solid content of the suspension in step a) is from 7% to 11% by weight, and wherein the weight ratio between said β-SiC particles and α-SiC particles is below 0.67.

11. The method according to any one of claims 7 to 10, further comprising a heat treating step e) after step d), said heat treating step comprising treatment at a temperature between 600 °C to 1000 °C under an oxidative atmosphere.

12. A ceramic filter comprising the membrane obtain by the method of any one of claims 7 to 11.

13. A filter system comprising the ceramic filter according to any one claims 1 to 6 or 12, a feeding pipe for feeding liquid into the ceramic filter and/or a permeate pipe for withdrawing filtered liquid and at least one liquid pump connected to said feeding pipe and/or to said permeate pipe.

14. The filter system according claim 13, wherein the ceramic filter is configured for cross-flow filtration or dead-end filtration.

15. A method of filtering an aqueous suspension through a ceramic filter according to any one of claims 1 to 6 or 12, or the filter system according to any one of claims 13 to 14, wherein the aqueous suspension comprises contaminates which are substantially insoluble in said aqueous suspension.

**SiC macroporous support** → Colloidal suspension with submicron SiC powders / Coated at sintered at a certain temperature → **SiC intermediate layer** → Colloidal suspension with nano/submicron SiC powders / Coated and sintered at various temperatures → **SiC selective layer**

Fig . 1

EP 4 574 248 A1

Fig . 2

Fig. 2 (cont.)

Fig . 3

Fig . 4

Fig . 4, cont

Fig. 5

Fig. 6

Fig. 7

Fig. 8

Fig. 8, cont.

Fig. 9

Europäisches
Patentamt

European
Patent Office

Office européen
des brevets

## EUROPEAN SEARCH REPORT

**Application Number**

EP 23 21 7613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM YONG-HYEON ET AL: "Processing and properties of silica-bonded porous nano-SiC ceramics with extremely low thermal conductivity", JOURNAL OF THE EUROPEAN CERAMIC SOCIETY, ELSEVIER, AMSTERDAM, NL, vol. 40, no. 7, 26 November 2019 (2019-11-26), pages 2623-2633, XP086110528, ISSN: 0955-2219, DOI: 10.1016/J.JEURCERAMSOC.2019.11.072 [retrieved on 2019-11-26] * the whole document * | 1-5, 12-15 | INV. B01D67/00 B01D69/02 B01D71/02 |
| X | WO 03/024892 A1 (STOBBE TECH HOLDING AS [DK]; STOBBE PER [DK]) 27 March 2003 (2003-03-27) * claims 1,11,12; figure 3 * | 1-6, 12-15 | |
| X | JP S63 315580 A (HITACHI SHIPBUILDING ENG CO) 23 December 1988 (1988-12-23) * example 1 * | 7-11 | TECHNICAL FIELDS SEARCHED (IPC) |
| A | JP H06 279119 A (HITACHI LTD; NIPPON STEEL CORP) 4 October 1994 (1994-10-04) * the whole document * | 1-15 | B01D |

-/--

The present search report has been drawn up for all claims

| Place of search | Date of completion of the search | Examiner |
|---|---|---|
| Munich | 21 May 2024 | Kukolka, Florian |

EPO FORM 1503 03.82 (P04C01)

| | Europäisches Patentamt European Patent Office Office européen des brevets | **EUROPEAN SEARCH REPORT** | Application Number EP 23 21 7613 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG YAO ET AL: "Recent progress in the pore size control of silicon carbide ceramic membranes", CERAMICS INTERNATIONAL, ELSEVIER, AMSTERDAM, NL, vol. 48, no. 7, 13 January 2022 (2022-01-13), pages 8960-8971, XP086974231, ISSN: 0272-8842, DOI: 10.1016/J.CERAMINT.2022.01.092 [retrieved on 2022-01-13] * the whole document * | 1-15 | |
| A | DULAL DAS: "Tuning the electrical, thermal, and mechanical properties of porous SiC ceramics using metal carbides", JOURNAL OF THE EUROPEAN CERAMIC SOCIETY, vol. 44, no. 5, 6 December 2023 (2023-12-06), pages 3020-3030, XP093158908, AMSTERDAM, NL ISSN: 0955-2219, DOI: 10.1016/j.jeurceramsoc.2023.12.017 * the whole document * | 1-15 | TECHNICAL FIELDS SEARCHED (IPC) |

The present search report has been drawn up for all claims

| Place of search | Date of completion of the search | Examiner |
|---|---|---|
| Munich | 21 May 2024 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 21 7613

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | Publication date | Patent family member(s) | Publication date |
|---|---|---|---|
| WO 03024892 A1 | 27-03-2003 | NONE | |
| JP S63315580 A | 23-12-1988 | JP H0688843 B2<br>JP S63315580 A | 09-11-1994<br>23-12-1988 |
| JP H06279119 A | 04-10-1994 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. ERAY** ; **V. BOFFA** ; **M.K. JORGENSEN** ; **G. MAGNACCA** ; **V.M. CANDELARIO**. Enhanced fabrication of silicon carbide membranes for wastewater treatment: From laboratory to industrial scale. *J. Memb. Sci.*, 2020, vol. 606, 118080, https://doi.org/10.1016/j.memsci.2020.118080

- **B.C BONEKAMP**. Preparation of asymmetric ceramic membrane supports by dip-coating. *Membrane Science and Technology*, 1996, vol. 4, 141-225
- **SHIMODA et al.** Surface properties and dispersion behaviors of SiC nanopowders, Colloids and Surfaces. *Physicochemical and Engineering Aspects*, 2014, vol. 463, 93-100